# EUROPEAN PATENT APPLICATION

(11) **EP 2 927 821 A1**
(43) Date of publication of application: **07.10.2015**
(21) Application number: 15159300.1
(22) Date of filing: 16.03.2015
(51) Int. Cl.: G06F 17/30

(54) **SYSTEMS AND METHODS TO REDUCE COMPUTING OVERHEAD IN A DATA MANAGEMENT APPLICATION**

(30) Priority: 31.03.2014 US 201414231472
(71) Applicant: Honeywell International Inc., Morristown, NJ 07962-2245 (US)
(72) Inventor: Vandetzweep, Jeff, Morristown, NJ New Jersey 07962-2245 (US); Hlucka, Martin, Morristown, NJ New Jersey 07962-2245 (US); Mikulka, David, Morristown, NJ New Jersey 07962-2245 (US); Dvorak, Zdenek, Morristown, NJ New Jersey 07962-2245 (US); Felke, Tim, Morristown, NJ New Jersey 07962-2245 (US); Begur, Nagabhushana Rao, Morristown, NJ New Jersey 07962-2245 (US)
(74) Representative: Houghton, Mark Phillip

(57) **Abstract**

Computer readable software objects, methods and apparatus are provided for using a path specification to limit requested entity data by designating a single explicit multiple step path between any two pairs of entity types. The computer readable software object comprises an ordered collection of path specification elements, a start entity, and an end entity. The method comprises determining a relationship specification from an input from a user. The method further includes determining if more than one path specification element exists that is associated with the relationship specification. When more than one path specification element exists, the user is provided with a choice of path specifications. The method then returns a list of entities from the destination entity type filtered through a restricted set of entities logically located between the source entity and the destination entity based exclusively on the path specification element chosen by the user.

## Description

### TECHNICAL FIELD

The present invention generally relates to database management, and more particularly relates to systems and methods to streamline data access.

### BACKGROUND

Typically, automated systems can only use data to find a single (i.e., "primary") logical path through intermediate data relationships, if any, in a database between two logical entities, a source entity and a destination entity. These direct paths are easy to find by an automated system because the system processor simply needs to find a single relationship path that connects the source and destination entities of concern.

An "entity" as used herein is a specific physical data table structure, or grouping, of a set of data elements that have a repeatable set of properties. Non-limiting examples of "entities" for a maintenance database may include component functions, component failure modes, failure mode symptoms and repairs for failure modes. A source entity is an entity of a given entity specification that is at the start of a given path and a destination entity is an entity of a particular entity specification that is at the end of a given path. An "entity specification" is the definition of different types of data items that can exist as "entities." Thus, an "entity" is an instance of an "entity specification." Entity metadata is the collection of entity specifications that have been defined for the system.

An" entity type" is data representing one particular set of data or entity (e.g., a data table in a database). "Entity types" can be thought of as common nouns describing groups of things and "entities" can be thought of as proper nouns describing specific things. Examples of "entities" include a computer, aircraft, navy ship, automobile, tank, engine, an employee, a song, a mathematical theorem.

A "relationship" is data indicating how one entity data type is related to another. Such data about the relationship data is metadata. A "relationship specification" is the definition of different types of items that can exist as relationships. Thus, a "relationship" is an instance of a "relationship specification." Relationship metadata is the collection of relationship specifications that have been defined for the system.

However, there is often more than a single relationship specification between the same pair of source and destination entities. A database operating system using just the available metadata in a database metafile will not be able to determine which relationship specification is the correct one to use. If more than one relationship specification exists in the database, the problem gets more complex because with each additional relationship specification added to the calculation, multiple additional paths from the same source entity to the same destination entity exist. This often results in an information user having to sort through an overabundance of returned results because all information in the destination entity is returned.

Data management can be simplified and computing overhead can be reduced by creating a specified path (i.e., a "path specification" or "path spec") to define a single explicit multiple step path through the data in a database between any two pairs of entities so that database operating code does not try to calculate and use all possible paths, which can be quite numerous. Hence, there is a need for systems and methods for streamlining and specifying data access in a database by allowing a particular "alternative path" to be designated.

### BRIEF SUMMARY

A computer readable software object stored on a tangible recording medium is provided for. The computer readable software object comprises an ordered collection of path specification elements, a start entity in a database, and an end entity in a database.

An database system is provided for. The database system comprises a computing device, a memory device in electronic communication with the computing device, and a data model resident within the memory device. The data model comprises an ordered collection of path specification elements, a start entity in a database, and an end entity in a database.

A method is provided for using a path specification to limit requested entity data by designate a single explicit multiple step path between any two pairs of entities. The method comprises determine a relationship specification from an input from a user. The relationship specification comprises a source entity and a destination entity. The method further includes determine if more than one path specification element exists that is associated with the relationship specification. When more than one path specification element exists, the user is provided with a choice of path specifications. The method then returns a list of data items from the destination entity filtered through a restricted set of entities logically located between the source entity and the destination entity based exclusively on the path specification element chosen by the user.

Furthermore, other desirable features and characteristics of the [system/method] will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a simplified diagram an exemplary system suitable for carrying out the various embodiments;
FIG. 2 is an exemplary relational diagram between data types in the exemplary fault model;
FIG. 3 is an abstract rendition of a path specification in relationship to a relationship specification and a data table; and
FIG. 4 is an exemplary logic flow diagram for a method for using a path spec in the context of a data retrieval operation.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose computing device, a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

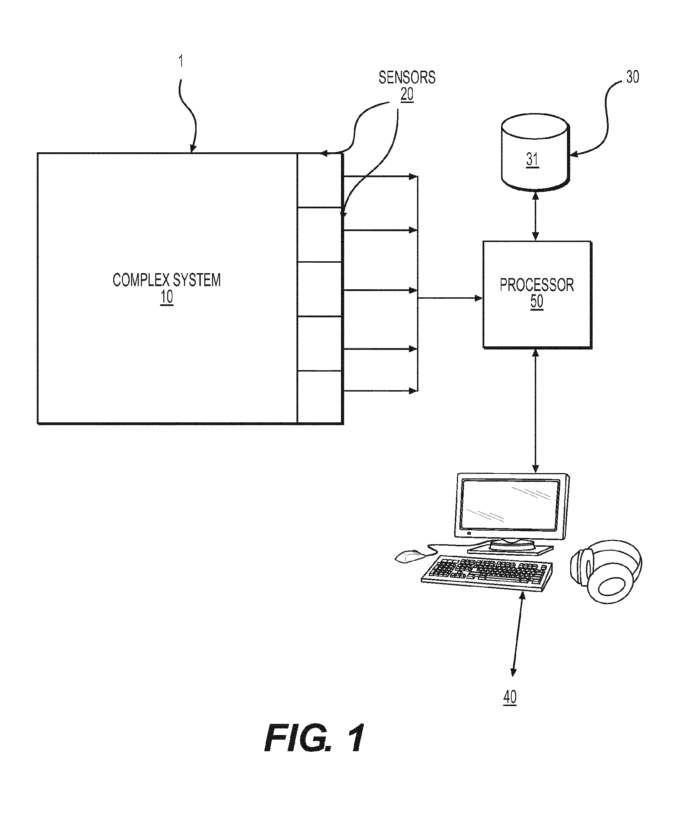

FIG. 1 is a simplified diagram an exemplary system suitable for carrying out the various embodiments of the methods disclosed herein. Although the methods disclosed here in are suitable for operation in any database, for ease and consistency of explanation, the methods and systems herein will be discussed in the context of a fault model of a complex system. A complex system 1 may be any asset, such as a vehicle, a processing plant, a building, assembly line, etc. without departing from the intended scope of this disclosure. In the field of medicine, the complex system may be a human patient.

The complex system, and/or any sub-system or component thereof, is monitored by one of more sensors 20. Sensors 20 may be any type of sensor known in the art or that may be devised in the future to monitor the complex system 1 for evidence of a fault.

As used herein, a "fault" refers to the observable defect or imperfection in a system. In particular, a fault is an actual, physical defect in a real, material system. As an example, an inoperative light bulb in a specific location on a specific aircraft at a specific time is a "fault" or a "failure." As used herein, the terms "fault" and "failure" are synonymous.

Contrarily, the phrase "failure mode" refers to the manner by which a failure or fault is observed in terms of the "symptoms" it generates, the functions it affects, its ultimate cause and the corrective actions required to remove the cause. A "failure mode" is a conceptual entity used to describe a class of "faults" that could occur in the system. A failure mode concept allows analysts to reason about hypothetical fault occurrences and to propose design improvements to reduce their impact and to develop maintenance practices to reduce their occurrence rates and/or ensure their effective remedy. As illustrative examples: "light bulb fails to illuminate due to internal failure" and "light bulb fails to illuminate due to lack of power" are both examples of "failure modes." Neither of these refers to a specific physical light bulb. Rather, they describe a class of faults/failures that could occur. Hence, a "failure mode" and a "fault" are two distinctly different but related concepts.

A "symptom" as used herein is the identifiable physical manifestation, or evidence, of a "fault." As an illustrative example, a symptom of an open circuit can be an extinguished light bulb in the circuit. Likewise, an extinguished light bulb is also a symptom of a defective light bulb. Thus, a symptom may be partially indicative evidence of several different faults, which in turn may be indicative of several different failure modes. A symptom can be a test outcome or an observation, such as an extinguished lamp.

The operation of the complex system 1 is modeled in software referred to herein as a "fault model" 31 which is stored in a memory device 30. The fault model 31 is essentially a database relating various data types, formula and logic subroutines related to the complex system 1. In the context of a fault model 31, these various data types may include sensor input signals (or "evidence"), failure modes, assemblies, sub-assemblies, corrective actions, symptoms, tests, test steps and test results, for example. A fault model is used herein as an exemplary data model. However, the subject matter described herein is not intended to be so limiting and is applicable to all data models.

Processor 50, receives evidence from the complex system in real time and refers to the fault model 31 to determine what the failure mode could be, further tests required to disambiguate the failure modes from other failure modes and determine the corrective action for the failure mode. Processor 50 also renders a graphical and/or textual report to a display device 40 such as a video screen or a printer as is known in the art. As an exemplary method suitable for disambiguating failure modes in the fault model 31 for a complex system 1 based on symptoms, one can refer to co-owned, co-pending application 14/194,058, which is incorporated by reference in its entirety.

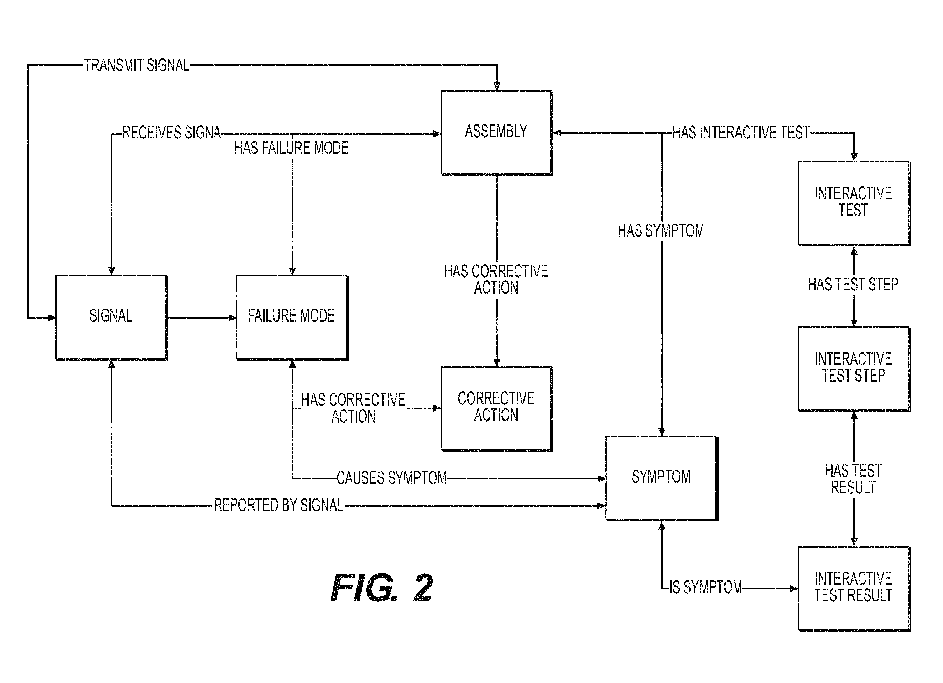

FIG. 2 is an relational diagram showing exemplary relationships between data types in the exemplary fault model 31. Each relationship that exists in its own data table. The exemplary data types are "assembly," "failure mode," "signal," "corrective action," symptom," "interactive test," interactive test step," and "interactive test result." The arrows indicate a direct "relationship" between two data types as may be conventionally found in metadata.

When there is a need to create a logical path from an assembly to the failure modes for that assembly, there can be multiple paths that the processor 50 may take. A "path," per se, as used herein is any set of entities and relationships between entities that may be logically followed by a processor to navigate through a database from one entity to another. A path is continuous (i.e., without interruption) between the source entity and the destination entity.

For example, a representative set of valid relationship paths between "assembly" and "failure mode" includes:
1) the direct path from Assembly-to-Failure Mode,
2) the path from Assembly-to-Failure Mode via Corrective Actions,
3) the path from Assembly-to-Failure Mode via Symptom
4) the path from Assembly-to-Failure Mode via Signal; and
5) the path from Assembly-to-Failure Mode via Interactive Test, Interactive Test Step, Interactive Test Result and Symptom.

Thus, database operating code would have a plurality of equally plausible paths to relate assembly and failure. Calculating and using all possible paths can be quite extensive in a large database structure such as fault model of a complex system. Typically, no relationships exist in a "primary path," which is a single step path from a source entity to a destination entity via a single relationship specification. Assembly -to-Failure Mode is an example of a direct path. An "alternate path" is any path other than a primary path that can be followed between the source and destination entities. Alternate paths reduce the potential list of returned destination data items from a full set of data to only a subset of data items that can be reached through intervening entities following an alternate path to the destination entity specification.

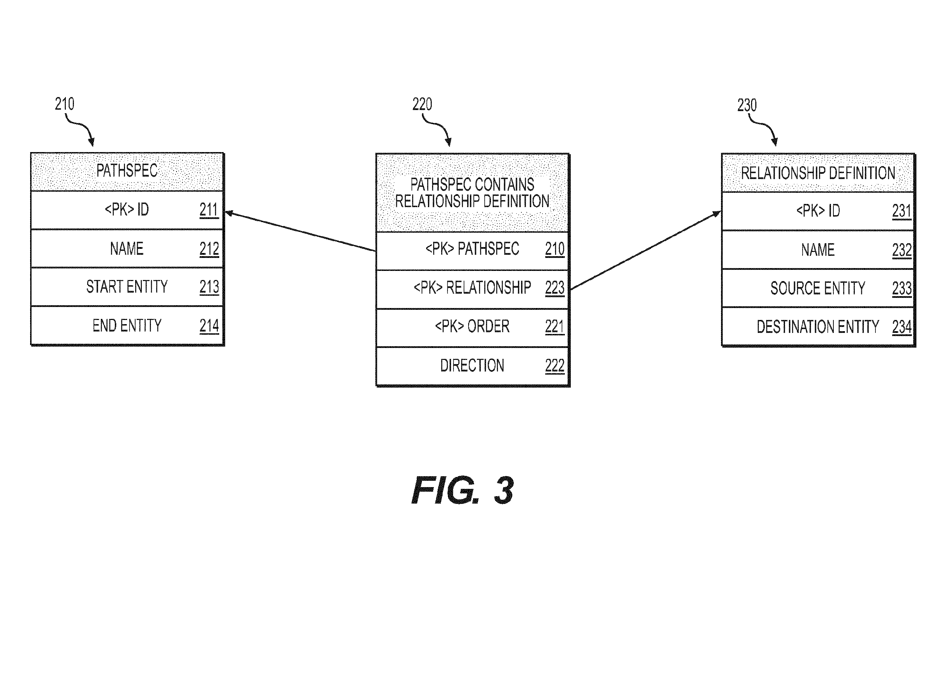

To economize on computing overhead and garner increased operational efficiency a path specification 210 or "path spec" (See, FIG. 3) may be created to designate a single explicit multiple step path between any two pairs of entities so that automated code of the database operating system would not need to try to calculate and use all possible paths. A path spec is defined using entity specifications and relationship specifications. In use, a path spec uses the entities and relationships to navigate from a start entity to a destination entity.

To create a path specification 210 , a new path spec element 220 (See, FIG. 3) is added to the database to store and organize named path specifications. A path specification element includes the name of the path spec 210 and the description of it. To define the actual paths to be followed, the path specification element 220 is created between the path specification 210 and the existing database relationship definition metadata tables 230 (See, FIG. 3). This path specification 210 lists all of the relationships included in a path 211, it indicates when the relationship is being followed in the forward or reverse context 222, and it indicates the order of the relationships in the path 211. Each path spec also has a relationship to the ultimate source entity 233 and destination entity 234.

In addition to returning data, the operating software of the database can use the defined path specs 210 when performing path-specific special functions. Special functions (or "filters") include "common parent" calculations that will use two different paths from different source entities that each lead to the same destination entity, and includes cascade calculations that use collections of paths to calculate cascaded fault information between two failure modes over any number of cascade paths.

This common parent filter uses existing path specifications that are defined against the source entity and destination entity of a primary path. The filter looks to see if any path specifications exist on both the source entity specification and the destination entity specification that each have a common destination entity spec. If a pair of path specifications exist that match this criteria then the common parent filter mechanism allows the user to select an entity from the common destination entity spec. Once selected, the list of entities along the x axis of a cross tab editor is reduced to only the set of entities that are linked via the applicable path spec to the selected entity instance. Also, the list of entities along the y axis of the cross tab editor is also reduced to only display the set of entities that are linked via the applicable path specification to the selected entity instance. This mechanism allows us to reduce both lists of items to only those that share an alternate relationship to the same entity. Cross tab editors are discussed further in co-owned, co-pending application 13/930,061 and is incorporated herein by reference in its entirety.

Other special functions include a friend-of-a-friend filter. This filter is used by a specialized cross tab editor to display a very localized set of related data to the end user. A cross tab editor is a grid with a list of entities on the x axis and a second list on the y axis. The grid shows which entity on the x axis is related with the corresponding entity on the y axis. With no filters applied, to either list, the displayed data can be very sparsely populated making it very difficult to review the related data. With the friend-of-a-friend filter, a user selects an entity as the entry point for the filter. The friend-of-a-friend filter then removes all entities on the other cross tab axis that do not have a direct relationship to the selected entity. Next, with that reduced set of entities on the second axis as an input, the filter is applied to the initial axis. On the initial axis, all entities are removed from the list if they are not related to any one of the entities remaining on the second axis. This filter is only applied on primary paths.

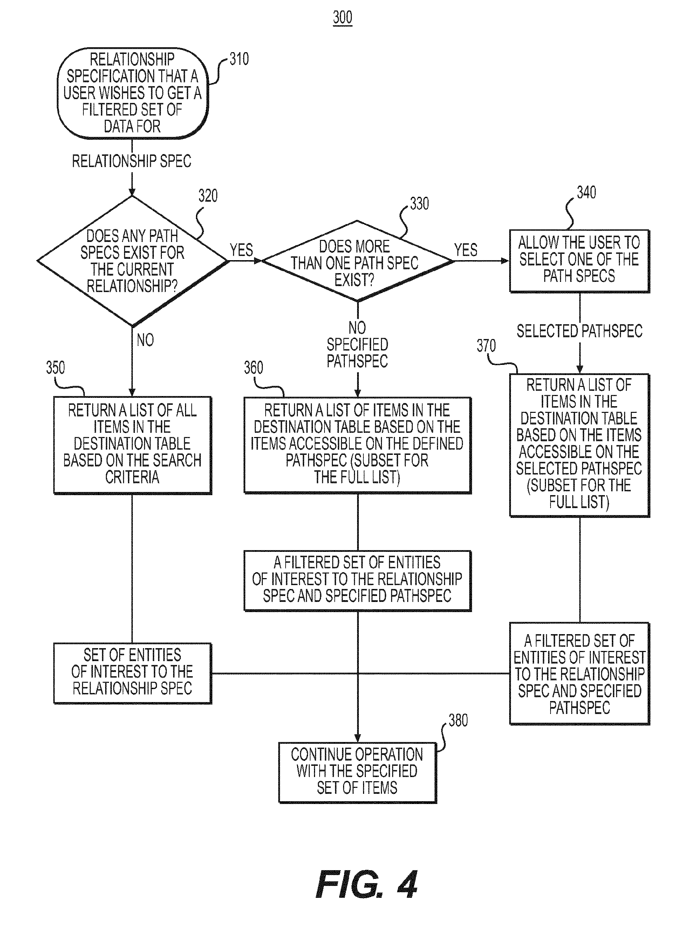

FIG. 4 is an exemplary logic flow diagram for a method 300 for using a path specification in the context of an exemplary data retrieval operation. After reading the disclosure herein, those of ordinary skill in the art will readily recognize other uses for the path spec that fall with in the scope and spirit of this disclosure. Given the numerous possible uses for a path spec, only exemplary method 300 will be described herein in the interest of brevity and clarity. Method 300 is not intended to limit the scope of the disclosure herein to data retrieval only.

At process 310, a relationship specification is determined by the processor 50 from a request for data input by a user. For example, the user may wish to get all failure modes related to a certain symptom being detected by sensor(s) 20. At determination point, 320, the processor 50 determines when a path spec exists for the desired relationship symptom-failure mode. When a path spec exists, the processor determines if multiple path specs exist for the same relationship at process 330 and presents a list to the user. When multiple path specs exist, an input from the user indicates which path is to be utilized to retrieve the desired failure mode data. At process 370, the processor returns a list of failure modes from the destination failure mode table based on the data items available on the selected path specification and relationship specification. When only one path spec is determined to exist at decision point 330, the processor automatically returns a list of failure modes from the destination failure mode table based on the data included in the chosen path spec and the relationship specification at process 360.

When no path specification is determine to exist at determination point 320, then the processor 50 returns a list of all items in the destination table based solely on the search criteria of the user input. Operation with the retrieved data continues at process 380.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A computer readable software object stored on a tangible recording medium, comprising:
an ordered collection of path specification elements;
a start entity in a database; and
an end entity in a database.

2. The computer readable software object of claim 1, wherein each path specification element comprises:
a path specification;
one or more relationships logically arranged between the start entity and the end entity;
an order of the one or more relationships; and
a direction by which a processor traverses the order of the one or more relationships.

3. A method for using a path specification to limit requested entity data by designate a single explicit multiple step path between any two pairs of entities, the method comprising:
determining a relationship specification from an input from a user, the relationship specification comprising a source entity and a destination entity;
determining if more than one path specification element exists that is associated with the relationship specification;
when more than one path specification element exists, providing the user with a choice of path specification elements; and
returning a list of data items from the destination entity filtered through a restricted set of entities logically located between the source entity and the destination entity based exclusively on the path specification element chosen by the user.

4. The method of claim 3, further comprising:
when only one path specification element exists, return a list of data items from the destination entity filtered through a restricted set of entities logically located between the source entity and the destination entity based exclusively on the only path specification element.

5. The method of claim 3, further comprising:
when no path specification element exists, return a list of all data items from the destination entity based on the relationship specification only.

6. A database system comprising:
a computing device;
a memory device in electronic communication with the computing device; and
a data model resident within the memory device, the data model comprising:
an ordered collection of path specification elements;
a start entity in a database; and
an end entity in a database.

7. The database system of claim 6, wherein each path specification element comprises:
a path specification;
one or more relationships logically arranged between the start entity and the end entity;
an order of the relationships; and
a direction by which a processor traverses the order of the relationships.

8. The database system of claim 7, wherein the computing device uses the path specification to:
determine a relationship specification from an input from a user, the relationship specification comprising a source entity and a destination entity;
determine if more than one path specification element exists that is associated with the relationship specification;
when more than one path specification element exists, provide the user with a choice of path specification elements; and
return a list of data items from the destination entity filtered through a restricted set of entities logically located between the source entity and the destination entity based exclusively on the path specification element chosen by the user.
